# EUROPÄISCHE PATENTSCHRIFT

(11) **EP 4 102 975 B1**
(45) Veröffentlichungstag und Bekanntmachung des Hinweises auf die Patenterteilung: **14.08.2024**
(21) Anmeldenummer: 21704250.6
(22) Anmeldetag: 08.02.2021
(51) Int. Cl.: A22C 7/00

(54) **VORRICHTUNG UND VERFAHREN ZUM FORMEN EINES STRANGFÖRMIGEN LEBENSMITTELS**
DEVICE AND METHOD FOR SHAPING A STRAND-SHAPED FOOD PRODUCT
DISPOSITIF ET PROCÉDÉ POUR FAÇONNER UN PRODUIT ALIMENTAIRE DE FORME ALLONGÉE

(30) Priorität: 10.02.2020 DE 102020103312
(43) Veröffentlichungstag der Anmeldung: 21.12.2022
(73) Patentinhaber: Marel TREIF GmbH, 57641 Oberlahr (DE)
(72) Erfinder: REIFENHÄUSER, Uwe, 57632 Flammersfeld (DE)
(74) Vertreter: Bauer, Dirk
(86) Internationale Anmeldenummer: PCT/EP2021/052958
(87) Internationale Veröffentlichungsnummer: WO 2021/160561

(56) Entgegenhaltungen:
- EP-A1- 1 867 233
- EP-A1- 3 542 979
- EP-A2- 1 595 456
- DE-B3- 102018 106 299
- FR-A1- 2 754 207
- US-A- 3 576 162
- US-B1- 9 526 257
- US-B2- 7 578 732

## Beschreibung

Die Erfindung betrifft zunächst eine Vorrichtung zum Formen eines strangförmigen Lebensmittels, insbesondere eines Fleischstücks, mit
a) einer Presskammer, die von Wandungen begrenzt ist und von denen mindestens eine mittels einer Presseinrichtung bewegbar und als Pressstempel ausgebildet ist, wodurch die Presskammer von einem Ausgangszustand mit einem ersten umschlossenen Volumen in einen Endzustand mit einem zweiten umschlossenen Volumen überführbar ist,
b) einer Zuführeinrichtung zum Zuführen des Lebensmittels in die Presskammer,
c) eine Abführeinrichtung zum Abführen des Lebensmittels aus der Presskammer.

Darüber hinaus betrifft die Erfindung ein Verfahren zum Formen eines strangförmigen Lebensmittels, insbesondere eines Fleischstücks.

### Stand der Technik

Zur industriellen Portionierung und Verpackung von strangförmigen Lebensmitteln, insbesondere von Fleischstücken, werden die Lebensmittel in aller Regel mittels einer Schneidmaschine in Scheiben zerteilt und anschließend an eine Verpackungseinrichtung übergeben, die eine bestimmte Anzahl der abgetrennten Scheiben gemeinsam in einer Verpackung verpackt. Die Anzahl der in einer Verpackung enthaltenen Scheiben richtet sich hierbei nach einer auf der Verpackung angegebenen Menge, wobei eine tatsächlich in der Verpackung enthaltene Menge des Lebensmittels lediglich innerhalb eines gesetzlich vorgegebenen Bereichs von der angegebenen Menge abweichen darf.

Als problematisch bei strangförmigen Lebensmitteln, insbesondere bei Fleischstücken, hat sich deren typischerweise ungleichmäßig geformte Oberfläche herausgestellt, aufgrund derer ein Abschneiden von Scheiben gleichen Gewichts bei konstanter Scheibendicke besonders erschwert ist. Eine Anpassung der Scheibendicke ist jedoch lediglich in relativ engen Grenzen akzeptiert, sodass die tatsächlich in der Verpackung enthaltene Menge häufig das angegebene Gewicht übersteigt, um eine Einhaltung der gesetzlichen Vorgaben zu wahren.

Um ein Abschneiden gleichgewichteter Scheiben bzw. gewichtsgenaue Portionen aus solchen Scheiben auch bei ungleichförmig geformten Lebensmitteln zu ermöglichen, sind deshalb Vorrichtungen zum Formen von Lebensmitteln bekannt, mittels derer das Lebensmittel in eine vorbestimmte Form pressbar ist, beispielsweise in die eines Quaders oder zumindest eines quaderähnlichen Volumens. Hierdurch kann sichergestellt werden, dass die abgetrennten Scheiben in einer Querschnittsfläche im Wesentlichen übereinstimmen, wodurch ein Abschneiden des geformten Lebensmittels bei ungefähr gleichbleibender Scheibendicke ermöglicht wird.

Eine vorstehend beschriebene Vorrichtung geht aus der EP 1 595 456 A2 hervor. Die Vorrichtung umfasst eine Presskammer, umfassend sechs Wandungen, von denen drei als bewegbare Pressstempel ausgebildet sind. Eine eine Grundplatte der Presskammer ausbildende Wandung ist fest verankert. Ebenso ist eine Rückseite der Presskammer als unbewegliche Wandung ausgebildet. Die zu formenden Lebensmittel werden der Presskammer mittels eines Förderbands zugeführt, wobei die Lebensmittel ausgehend von einer ersten Ebene mittels des Förderbands zu einem Randbereich des Förderbands befördert werden und anschließend auf die Grundplatte, welche vertikal unterhalb des Förderbands angeordnet ist, fallen. Vorgesehen ist dabei, dass zwei, mittels eines Trennteils voneinander getrennte Lebensmittel zeitgleich mittels der Vorrichtung geformt werden, indem die als Presstempel ausgebildeten Wandungen bewegt werden. Nach dem Formvorgang wird eine eine Seite ausbildende Wandung derart bewegt, dass ein Öffnungsquerschnitt der Presskammer freigegeben wird. Die beiden geformten Lebensmittel werden dann mittels einer Bewegung des gegenüberliegenden Pressstempels aus der Presskammer befördert.

Aus der DE 10 2016 122 126 A1 geht ebenfalls eine Vorrichtung zum Formen eines Lebensmittels hervor. Die Vorrichtung umfasst eine Presskammer mit zwei als Pressstempeln ausgebildeten Wandungen, mittels derer das Lebensmittel formbar ist. Das Lebensmittel wird der Presskammer hierbei mittels eines Transportbands, welches in einem Winkel zu einer Horizontalen ausgerichtet ist und eine erste Bewegungsrichtung aufweist, zugeführt. Daran anschließend erfolgt der Formvorgang. Um das Lebensmittel aus der Presskammer zu entfernen, wird eine eine Seite ausbildende Wandung bewegt, um einen Öffnungsquerschnitt freizugeben, während ein auf einer gegenüberliegenden Seite angeordneter Pressstempel bewegt wird, um das Lebensmittel aus der Presskammer zu befördern und an das Transportband zu übergeben, welches in eine - im Vergleich zur ersten Bewegungsrichtung - entgegengesetzte Bewegungsrichtung verläuft und ebenfalls in einem Winkel zur der Horizontalen ausgerichtet ist. Eine Zuführöffnung der Presskammer entspricht somit einer Abführöffnung der Presskammer.

Die DE 20 2005 018 374 U1 beschreibt eine Vorrichtung zum Formen eines Lebensmittels, die eine Presskammer sowie ein Transportband zur Zuführung des Lebensmittels in die Presskammer und aus dieser heraus aufweist. Hierzu weist die Vorrichtung ein Mittel zum Aufnehmen des Lebensmittels auf, das mit dem Transportband gekoppelt ist, sodass das Mittel bei einer Bewegung des Transportbands mitbewegt wird. Mittels des Transportbands wird das auf dem Mittel aufliegende Lebensmittel zu einer Presskammer befördert, die das Lebensmittel mittels ihrer Pressstempel formt. Nach dem Formvorgang wird das Lebensmittel durch das Mittel aus der Presskammer heraus gefördert.

Ferner ist aus der DE 2 140 585 A eine Vorrichtung zum Pressen von Fleischwaren, insbesondere Bauchspeck, mit einer Mehrzahl parallel zueinander ausgerichteter Walzen bekannt, die zwischen sich einen Pressspalt bilden, durch den die zu pressende Fleischware hindurch geführt wird. Als Fördereinrichtung wird dabei ein Transportband verwendet, auf dem die Fleischware aufliegt. Bei der vorbekannten Vorrichtung sind gegenüber liegende Walzenpaare so angeordnet, dass sich ein zwischen ihnen gebildeter Pressspalt in Vorschubrichtung zunehmend verkleinert. Eine Presskammer im Sinne einer Vorrichtung der dieser Anmeldung zugrunde liegenden Art, bei der das Lebensmittel während des Pressvorgangs stillsteht, ist nicht vorhanden. Auch funktioniert die vorbekannte Vorrichtung bei stillstehendem Transportband nicht, da ansonsten keine Weiterbewegung der Fleischware durch die Walzenpaare ermöglicht würde, eine solche Weiterbewegung aber zur Erzielung des Presseffekts unerlässlich ist. Bei stillstehendem Transportband müsste nämlich eine relative Gleitbewegung zwischen der Oberfläche des Transportbands und den oberen Presswalzen eintreten, was nicht durchführbar ist. Außerdem sind bei der aus der DE 2 140 585 A bekannten Vorrichtung sowohl die Gesamtheit der unteren Walzen als auch die Gesamtheit der oberen Walzen in jeweils einem gemeinsamen Rahmen zusammengefasst und gelagert, wobei dieser Rahmen parallel zu sich und senkrecht zu den Walzenachsen verschiebbar ist, oder um eine Walzenachse oder eine zu den Walzenachsen parallele Achse schwenkbar angeordnet ist.

Weitere Vorrichtungen und Verfahren zum Formen eines strangförmigen Lebensmittels sind auch aus den Dokumenten EP 3 542 979 A1, US 9 526 257 B1 und EP 1 867 233 A1 bekannt.

### Aufgabe

Es ist Aufgabe der vorliegenden Erfindung, eine Vorrichtung zum Formen eines Lebensmittels zu entwickeln, welche durch eine besonders kompakte Bauweise auszeichnet. Diese Aufgabe soll analog für ein Verfahren zum Formen eines Lebensmittels erfüllt werden.

### Lösung

Ausgehend von der eingangs genannten Vorrichtung wird die vorstehende Aufgabe dadurch gelöst, dass ein mit dem in der Presskammer befindlichen Lebensmittel in Kontakt tretender Pressstempel einer ersten Presseinrichtung derart mit mindestens einer in eine andere Richtung bewegbaren zweiten Presseinrichtung und/oder einer Wandung der Presskammer gekoppelt ist, dass die zweite Presseinrichtung insgesamt und/oder die vorgenannte Wandung gemeinsam mit dem Pressstempel der ersten Presseinrichtung relativ zu dem Lebensmittel bewegbar ist, wobei das Lebensmittel durch Bewegung der als Presstempel ausgebildeten Wandungen der Presskammer von einem ungeformten Zustand in einen geformten Zustand überführbar ist, und wobei die als Pressstempel ausgebildeten Wandungen nach einem Überführen des Lebensmittels in einen geformten Zustand in umgekehrter Reihenfolge von dem Lebensmittel entfernbar sind, wobei das selbige im Wesentlichen in seinem geformten Zustand verbleibt.

Im Sinne dieser Anmeldung wird als "umschlossenes Volumen" ein Rauminhalt verstanden, der von einer beliebig geformten Oberfläche eingeschlossen ist, wobei zumindest Teile der einschließenden Oberfläche nicht notwendigerweise körperlich vorhanden sein müssen. Vielmehr kann die Oberfläche teilweise von Ebenen gebildet sein, die von einer gedanklichen Verlängerung bestehender Bauteile gebildet sind, wobei Schnitte derartiger Ebenen mit anderen, gedanklichen Ebenen einerseits oder den körperlichen Bauteilen andererseits das Volumen definieren.

Als "Ausgangszustand" der Presskammer wird im Sinne dieser Anmeldung ein Zustand der Presskammer verstanden, in dem die Presskammer zumindest derart dimensioniert ist, dass ein zu formendes Lebensmittel in der Presskammer platzierbar ist, ohne dass es bereits zu einer Verformung des Lebensmittels kommt. Vorzugsweise ist dabei vorgesehen, dass die Wandungen der Presskammer im Ausgangszustand beabstandet zu einer Oberfläche des Lebensmittels angeordnet sind. Ebenso ist jedoch auch vorstellbar, dass die Wandungen zumindest teilweise mit der Oberfläche des Lebensmittels in Kontakt stehen. Insbesondere liegt die Presskammer in ihrem Ausgangszustand nicht notwendigerweise in demjenigen Zustand vor, in welchem sie das größte Volumen einfasst. Der Ausgangszustand kann mithin abhängig von einem Volumen des zu formenden Lebensmittels sein.

Als "Endzustand" der Presskammer wird im Sinne dieser Anmeldung derjenige Zustand der Presskammer verstanden, in der die selbige derart mit dem zu formenden Lebensmittel in Kontakt steht, insbesondere Presskräfte auf dieses überträgt, wodurch das selbige in seinen geformten Zustand überführt wurde.

Ein Formvorgang, bei dem das Lebensmittel von einem ungeformten Zustand in einen geformten Zustand überführt wird, erfolgt mithin im Zuge einer Überführung der Presskammer von ihrem Ausgangszustand in ihren Endzustand.

Die erfindungsgemäße Vorrichtung hat viele Vorteile. Insbesondere ist es mittels einer Kopplung der ersten Presseinrichtung mit einer weiteren Presseinrichtung und/oder einer Wandung der Presskammer möglich, einen Öffnungsquerschnitt der Presskammer besonders einfach freizugeben, um hierdurch eine Zuführung des ungeformten Lebensmittels in die Presskammer hinein und eine Abführung des geformten Lebensmittels aus der Presskammer heraus zu ermöglichen.

Es versteht sich, dass die Presskammer, welche von einer Mehrzahl ein Volumen umschließender Wandungen gebildet ist, zwecks Zuführung des zu formenden Lebensmittels in die Presskammer zumindest einen Öffnungsquerschnitt freigeben muss, durch welchen das Lebensmittel hindurch der Presskammer zuführbar ist. Dies gilt analog für das Abführen des Lebensmittels, wobei es denkbar ist, dass die Zuführung als auch die Abführung durch einen gemeinsamen Öffnungsquerschnitt erfolgen. Als Alternative kann es jedoch auch besonders vorteilhaft sein, wenn zwei verschiedene Öffnungsquerschnitte ausbildbar sind.

So ist beispielsweise denkbar, dass der Öffnungsquerschnitt im Bereich einer Wandung ausbildbar ist, die senkrecht zu einer Bewegungsrichtung, mit der das Lebensmittel in die Presskammer einführbar ist, ausgebildet wird.

Mittels einer Kopplung der ersten Presseinrichtung mit einer anderen Presseinrichtung und/oder einer Wandung der Presskammer kann eine Bewegung der ersten Presseinrichtung dazu genutzt werden, einen Öffnungsquerschnitt der Presskammer auszubilden. Vorteilhafter Weise ist eine weitere Einrichtung, die eine der zweiten Presseinrichtung zugehörige Wandung der Presskammer oder eine Wandung zur Ausbildung eines Öffnungsquerschnitts bewegt, nicht erforderlich. Die Bewegung der ersten Presseinrichtung lässt sich mithin doppelt nutzen. Die Vorrichtung ist mithin platzsparend ausbildbar.

Bei einer derartigen Kopplung ist es ferner insbesondere vorstellbar, dass der erste Pressstempel eine Oberseite der Presskammer ausbildet, während ein der zweiten Presseinrichtung zugehöriger Pressstempel eine Seite der Presskammer ausbildet. In einer solchen Konstellation ist es darüber hinaus besonders vorteilhaft, wenn die erste Presseinrichtung mit einer dritten Presseinrichtung gekoppelt ist, die zur Bewegung eines dritten Pressstempels vorgesehen ist, welche ebenfalls eine Seite der Presskammer ausbildet. Insgesamt ließen sich in einer derartigen Konstellation bei einer Bewegung der ersten Presseinrichtung, welche die Oberseite der Presskammer bildet, die beiden Seiten der Presskammer bewegen, sodass das Lebensmittel von einer Seite der Presskammer zuführbar und von der gegenüberliegenden Seite aus der Presskammer abführbar ist.

Ebenfalls ist jedoch auch vorstellbar, dass eine Rückseite der Presskammer ausbildende Wandung mit der der Oberseite zugehörigen Presseinrichtung gekoppelt wird, sodass das Lebensmittel durch den gleichen Öffnungsquerschnitt zuführbar und abführbar ist.

Die Presseinrichtungen sind beispielsweise in Form eines elektromechanischen Zylinders ausgebildet, der durch einen Servomotor angetrieben werden. Ebenso ist auch denkbar, dass die Presseinrichtungen von hydraulischen Zylindern oder Linearmotoren gebildet werden. In jedem Fall ist es besonders von Vorteil, wenn die Presseinrichtungen druckgesteuert betreibbar sind, sodass eine Bewegung der Pressstempel bei Erreichen eines vorgegebenen Enddrucks automatisch beendet wird.

In einer vorzugsweisen Ausgestaltung der Erfindung ist der Pressstempel der ersten Presseinrichtung quer, vorzugsweise senkrecht, zu einem Boden der Presskammer, der vorzugsweise ungefähr waagerecht ausgerichtet ist, bewegbar.

Von dem Pressstempel auf das Lebensmittel ausgeübte Presskräfte sind hierbei in den Boden der Presskammer einleitbar. Vorzugsweise ist hierbei vorgesehen, dass der Boden nicht als Pressstempel ausgebildet ist, sondern lediglich als unbewegliches und die Presskraft senkrecht zu einer Längsrichtung des Lebensmittels aufnehmendes Gegenstück zu einem gegenüberliegenden Pressstempel ausgebildet ist.

In einem solchen Fall ist die Kopplung der ersten Presseinrichtung mit einer Presseinrichtung oder einer Wandung, die eine Vorderseite, eine Rückseite oder Seiten der Presskammer ausbilden, besonders geeignet, wobei die jeweilige Presseinrichtung oder Wandung infolge der Bewegung der ersten Presseinrichtung in einem solchen Fall einen Öffnungsquerschnitt freigeben können.

Gemäß einer vorteilhaften Ausgestaltung der Erfindung ist vorgesehen, dass an dem ersten Presstempel eine zweite Presseinrichtung und eine dritte Presseinrichtung befestigt sind, mit denen ein zweiter und ein dritter Pressstempel in entgegengesetzte Richtungen bewegbar sind und dass vorzugsweise die zweite Presseinrichtung und die dritte Presseinrichtung an gegenüberliegenden Enden des ersten Presstempels angeordnet sind.

Denkbar ist hierbei, dass der zweite als auch der dritte Pressstempel parallel zu einer Bewegungsrichtung des Lebensmittels bewegbar sind, während der erste Pressstempel senkrecht zu der Bewegungsrichtung des Lebensmittels bewegbar ist. Bei Verwendung einer derartigen Kopplung der Pressstempel ist ein Öffnungsquerschnitt der Presskammer, durch welchen das zu formende Lebensmittel hindurch in die Presskammer führbar ist, in besonders vorteilhafter Weise ausbildbar.

Im Gegensatz zu bekannten Vorrichtungen zum Formen eines Lebensmittels ist es auf diese Weise möglich, Presskräfte gleichmäßig in das Lebensmittel einzuleiten. Insbesondere erfolgt die Krafteinleitung - beispielsweise in Längsrichtung des Lebensmittels betrachtet - nicht einseitig, wodurch das Lebensmittel vornehmlich auf dieser Seite komprimiert würde, während die gegenüberliegende Seite im Wesentlichen unverändert verbleiben würde. Mit anderen Worten würde sich in einem solchen Fall ein Kompressionsgradient ausbilden. Folge wäre eine ungleichmäßige Komprimierung des Lebensmittels, die eine ungleichmäßige Dichteverteilung des Lebensmittels in eine Pressrichtung zur Folge hat, welche sich nachteilig auf ein Abschneiden von Scheiben gleichen Gewichts auswirkt.

Gemäß einer vorzugsweisen Ausgestaltung der Erfindung ist vorgesehen, dass eine mit dem Lebensmittel im Endzustand der Presskammer in Kontakt stehende Kontaktfläche des zweiten Presstempels und/oder eine Kontaktfläche des dritten Pressstempels veränderbar, vorzugsweise in ihrer Größe veränderbar, ist.

Ein "Endquerschnitt" der Presskammer ist zum einen abhängig von einem Querschnitt des zu formenden Lebensmittels und zum anderen von einer Kompressionsfähigkeit des zu formenden Lebensmittels und unterscheidet sich mithin für verschiedenartige Lebensmittel. Vorzugsweise ist vorgesehen, dass die Pressstempel druckgesteuert betrieben werden, sodass ein jeweiliger Endzustand der Presskammer dann vorliegt, wenn eine Bewegung der Pressstempel bei Erreichen eines vorgegebenen Enddrucks beendet wurde. Mittels einer Anpassung der jeweiligen Kontaktfläche der zweiten und/oder der dritten Pressstempels sind diese vorteilhafter Weise an den Endquerschnitt der Presskammer anpassbar, sodass das Lebensmittel gleichmäßig formbar ist.

Die eingangs genannte Aufgabe wird ausgehend von einem Verfahren zum Formen eines strangförmigen Lebensmittels, insbesondere eines Fleischstücks, dadurch gelöst, dass bei einer Bewegung des Pressstempels einer ersten Presseinrichtung wird mindestens eine zweite Presseinrichtung mit ihrem Pressstempel mitbewegt.

Das erfindungsgemäße Verfahren umfasst hierbei zunächst sechs Schritte: In einem ersten Schritt wird eine von den Wandungen begrenzte Presskammer geöffnet, indem mindestens eine der Wände relativ zu mindestens einer anderen der Wände bewegt wird, wodurch ein Öffnungsquerschnitt freigegeben wird. In einem Ausgangszustand als auch in einem Endzustand umschließt die Presskammer das Lebensmittel. In einem zweiten Schritt wird das Lebensmittel durch den Öffnungsquerschnitt in die Presskammer eingeführt, vorzugsweise mittels der Zuführeinrichtung. In einem dritten Schritt wird der Öffnungsquerschnitt der Presskammer wieder geschlossen und das Lebensmittel durch Bewegung von als Presstempel ausgebildeten Wänden der Presskammer von einem ungeformten Zustand in einen geformten Zustand überführt. Die Presskammer liegt mithin in ihrem Endzustand vor. In einem vierten Schritt wird ein Öffnungsquerschnitt der Presskammer freigegeben und das geformte Lebensmittel durch diesen Öffnungsquerschnitt aus der Presskammer abgeführt. Vorzugsweise erfolgt die Abführung des Lebensmittels mittels der Abführeinrichtung. In einem fünften Schritt wird bei einer Bewegung des Pressstempels einer ersten Presseinrichtung mindestens eine zweite Presseinrichtung mit ihrem Pressstempel mitbewegt wird. In einem sechsten Schritt werden die als Pressstempel ausgebildeten Wandungen nach dem Überführen des Lebensmittels in den geformten Zustand in umgekehrter Reihenfolge von dem Lebensmittel entfernt, wobei das selbige im Wesentlichen in seinem geformten Zustand verbleibt.

Bei einer reihenweisen Zuführung mehrerer Lebensmittel ist es dabei vorzugsweise vorgesehen, dass beim Freigeben des Öffnungsquerschnitts zur Abführung eines ersten Lebensmittels zeitgleich ein Öffnungsquerschnitt zum Zuführen eines zweiten, nachgeordneten Lebensmittel freigegeben wird und in analoger Weise für die folgenden Lebensmittel verfahren werden kann. Vorteilhafter Weise kann das Verfahren auf diese Weise beschleunigt werden. Die in Bezug auf die erfindungsgemäße Vorrichtung genannten Vorteile werden dabei analog mittels des vorbeschriebenen Verfahrens erzielt.

Gemäß einer vorzugsweisen Ausgestaltung der Erfindung ist vorgesehen, dass das Lebensmittel mittels eines Transportbandes in die Presskammer eingeführt und/oder mittels eines Transportbandes aus der Presskammer abgeführt wird.

Vorteilhafter Weise ist das zu formende Lebensmittel mithin automatisiert, also ohne händisches Zutun, der Presskammer zuführbar und aus dieser abführbar ist. Somit kann hierdurch ein Personalaufwand ebenso wie ein Zeitaufwand zur Überführung des geformten Lebensmittels aus der Vorrichtung heraus minimiert werden, sodass ein Durchsatz der Vorrichtung verbessert wird.

Darüber hinaus ist die Vorrichtung auf diese Weise besonders einfach in ein bestehendes Transportsystem integrierbar. Vorstellbar ist hierbei, dass das Fördersystem aus einer Mehrzahl von Vorrichtungen, insbesondere einer Schneidvorrichtung sowie einer Vorrichtung zum Formen und einer Vielzahl von dieser verbindenden Transportbändern gebildet ist, in welche sich die erfindungsgemäße Vorrichtung besonders einfach integrieren lässt. Das Lebensmittel muss mithin lediglich einmalig auf einem ersten Transportband platziert werden. Dadurch ist ein händisches Auflegen des geformten Lebensmittels auf ein Transportband, welches das Lebensmittel zu einer nachgeordneten Schneideinrichtung befördert, oder ein händisches Einlegen in die Schneidmaschine selbst nicht länger nötig. Vielmehr ist das geformte Lebensmittel mittels desselben oder mittels eines weiteren Transportbands zu der Schneideinrichtung beförderbar, ohne dass zuvor eine erneute Ausrichtung oder ein Entnehmen des Lebensmittels aus der Vorrichtung nötig ist. Das Lebensmittel nimmt nämlich in seinem geformten Zustand auf dem Transportband der Vorrichtung bereits eine genau definierte Position ein, die auch bei einem weiteren Transport dazu führt, dass das Lebensmittel ohne Neupositionierung weitergegeben werden kann.

Darüber hinaus kann sichergestellt werden, dass das Lebensmittel nach dem Formvorgang nicht infolge eines Auswurfs, wie er aus dem Stand der Technik bekannt ist, erneut deformiert wird. Vielmehr bleibt die mittels der Vorrichtung erhaltene Form des Lebensmittels durch Weiterleitung des selbigen mittels eines Transportbands erhalten.

Eine vorteilhafte Ausgestaltung der Erfindung sieht vor, dass ein Transportband eine dem ersten Pressstempel gegenüber liegende Wandung der Presskammer zumindest teilweise umläuft.

Vorzugsweise ist hierbei vorgesehen, dass die Wandung einen Boden der Presskammer ausbildet, der unbeweglich in der Vorrichtung angeordnet ist. In einer derartigen Konstellation ist es besonders vorteilhaft, wenn der zweite Pressstempel eine Wandung der Presskammer ausbildet, die senkrecht zu einer Bewegungsrichtung des Transportbands verläuft, welche wiederum parallel zu dem Boden verläuft, sodass die Wandung einen Öffnungsquerschnitt freigibt, um das Lebensmittel der Presskammer in Bewegungsrichtung des Transportbands zuzuführen. Im Vergleich zu den bekannten Vorrichtungen ist somit kein zum Transportband zusätzlich vorgesehenes Mittel zur Aufnahme des Lebensmittels nötig. Vielmehr ist das Lebensmittel einfach auf dem Transportband auflegbar.

Gemäß einer vorzugsweisen Ausgestaltung der Erfindung ist vorgesehen, dass der zweite Pressstempel bei Erreichen einer Endposition, in der der zweite Pressstempel im Wesentlichen mit einer Wandung der Presskammer in Kontakt tritt und/oder der dritte Pressstempel bei Erreichen einer Endposition, in der der dritte Pressstempel im Wesentlichen mit einer Wandung in Kontakt tritt, relativ zu dem ersten Pressstempel in die Richtung, in die der erste Presstempel bewegt wird, bewegt wird beziehungsweise werden.

Die Endposition des jeweiligen Pressstempels wird hierbei dann eingenommen, wenn der Pressstempel maximal in die Richtung ausgelenkt ist, in die der erste Pressstempel bewegt wird, insbesondere wenn der Pressstempel mit einer Wandung der Presskammer in Kontakt tritt, wobei der Pressstempel nicht unmittelbar mit der Wandung selbst in Kontakt stehen muss. Ebenfalls ist vorstellbar, dass der Pressstempel mit einem Transportband, das die Wandung zumindest teilweise bedeckt, in Kontakt steht. Um den ersten Pressstempel auch bei Vorliegen des zweiten beziehungsweise dritten Pressstempels in der jeweiligen Endposition weiter bewegen zu können, um weitere Presskräfte in das Lebensmittel einleiten zu können, hat sich eine solche Ausgestaltung als besonders vorteilhaft erwiesen. Insbesondere ist es hierdurch ermöglicht, zu verhindern, dass der erste Pressstempel infolge seiner Kopplung mit dem zweiten und/oder dritten Pressstempel nicht weiter bewegbar ist, sobald der zweite und/oder dritte Pressstempel seine Endposition erreicht hat. Vorzugsweise weist der zweite und/oder dritte Pressstempel mit seiner zugehörigen Presseinrichtung hierzu eine Linearführung auf, die mit dem ersten Pressstempel und der dazugehörigen Presseinrichtung gekoppelt ist.

Gemäßer einer vorzugsweisen Ausgestaltung der Erfindung ist vorgesehen, dass die Zuführung des umgeformten Lebensmittels in die Presskammer und die Abführung des geformten Lebensmittels aus der Presskammer auf gegenüberliegenden Seiten der Presskammer erfolgen, vorzugsweise durch Bewegen des Lebensmittels in dieselbe Richtung.

Dadurch, dass die Zuführung des ungeformten Lebensmittels in die Presskammer und die Abführung des mittels der Vorrichtung geformten Lebensmittels aus der Presskammer auf gegenüberliegenden Seiten der Presskammer - und somit vorzugsweise gegenüberliegenden Seiten der Vorrichtung - erfolgen, ist es besonders einfach, die Vorrichtung in ein vorstehend beschriebenes Transportsystem zu integrieren, bei dem die beiden Seiten an ein weiteres Transportband ankoppelbar sind.

Eine derartige Führung des Lebensmittels ermöglicht es darüber hinaus, den Durchsatz der Vorrichtung zu erhöhen, da der Vorrichtung eine Mehrzahl von zu formende Lebensmittel nacheinander zugeführt werden können, ohne das ein bereits geformtes Lebensmittel zunächst aus der Vorrichtung entnommen werden muss, um der Vorrichtung ein weiteres Lebensmittel zuführen zu können.

Eine vorzugsweise Ausgestaltung der Erfindung sieht vor, dass mindestens eine als Pressstempel ausgebildete Wandung während des Einführens des Lebensmittels in die Presskammer senkrecht und/oder parallel zu einer Bewegungsrichtung des Lebensmittels, in der das Lebensmittel der Presskammer zugeführt wird, vorzugsweise in Bewegungsrichtung oder senkrecht dazu, bewegt wird, sodass ein Abstand zwischen der Wandung und einer gegenüberliegenden Wandung der Presskammer verringert wird.

Auf diese Weise lässt sich die Presskammer in ihrer Größe bereits vor einer endgültigen Positionierung des Lebensmittels in der Presskammer an das Lebensmittel anpassen. Vorteilhafter Weise lässt sich der Zeitaufwand zum Formen eines Lebensmittels hierdurch reduzieren, da Verfahrwege der Pressstempel in einem anschließenden Formvorgang reduziert sind. Vorzugsweise ist dabei eine Lichtschranke vorgesehen, die eine Länge des Lebensmittels bestimmt. Mittels der bestimmten Länge kann der Abstand zwischen den gegenüberliegenden Wandungen derart angepasst werden, dass diese der Länge des Lebensmittels im Wesentlichen entspricht, vorzugsweise etwas übersteigt, sodass das Lebensmittel zwischen den Wandungen angeordnet werden und schließlich geformt kann.

Eine weitere vorzugsweise Ausgestaltung der Erfindung sieht vor, dass eine Temperatur des Lebensmittels zumindest in Randbereichen geringer ist als eine Temperatur des Lebensmittels in einem Kernbereich. Es hat sich herausgestellt, dass eine mittels des Formvorgangs erhaltene Form des Lebensmittels hierdurch vorteilhafter Weise länger erhalten bleibt, sodass das Lebensmittel bei Erreichen einer nachgeordneten Schneidmaschine weiterhin in einem geformten Zustand vorliegt und gleichwohl mit konventionellen Schneidmaschinen aufgeschnitten werden kann. Vorzugsweise ist hierbei vorgesehen, dass die Temperatur des Lebensmittels in den Randbereichen unter 0°C liegt. Insbesondere wird eine Rückstellkraft des Lebensmittels, welche dafür sorgt, dass das Lebensmittel in seinen ungeformten Zustand zurückkehrt, hierdurch reduziert.

Vorzugsweise ist die Presskammer, und zwar weiter vorzugsweise in sämtlichen drei senkrecht aufeinander stehenden Raumrichtungen, von (jeweils) paarweise parallel zueinander ausgerichteten Wandungen begrenzt.

### Ausführungsbeispiel:

Die vorstehend beschriebene Erfindung wird nachfolgend anhand eines Ausführungsbeispiels, das in den Figuren dargestellt ist, näher erläutert.

Es zeigt:
- Figur 1:: eine perspektivische Ansicht einer erfindungsgemäßen Vorrichtung,
- Figur 2:: einen vertikalen Schnitt durch die Vorrichtung aus Figur 1,
- Figur 2a:: wie Figur 2, wobei ein Öffnungsquerschnitt einer Presskammer kenntlich gemacht ist,
- Figur 3:: wie Figur 2, wobei ein Pressstempel der Presskammer verschoben ist,
- Figur 4:: wie Figur 3, wobei ein weiterer Pressstempel verschoben ist,
- Figur 5:: einen weiteren vertikalen Schnitt durch die Vorrichtung aus Figur 1,
- Figur 6:: wie Figur 5, wobei ein weiterer Presstempel verschoben ist,
- Figur 7:: eine schematische Darstellung eines Lebensmittels in einem ungeformten Zustand und
- Figur 8:: wie Figur 7, wobei das Lebensmittel in einem geformten Zustand vorliegt.

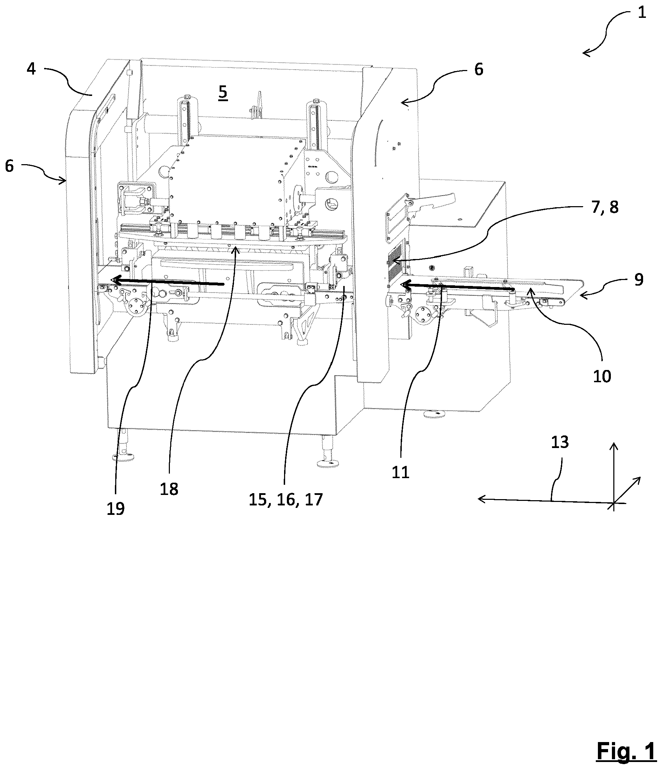

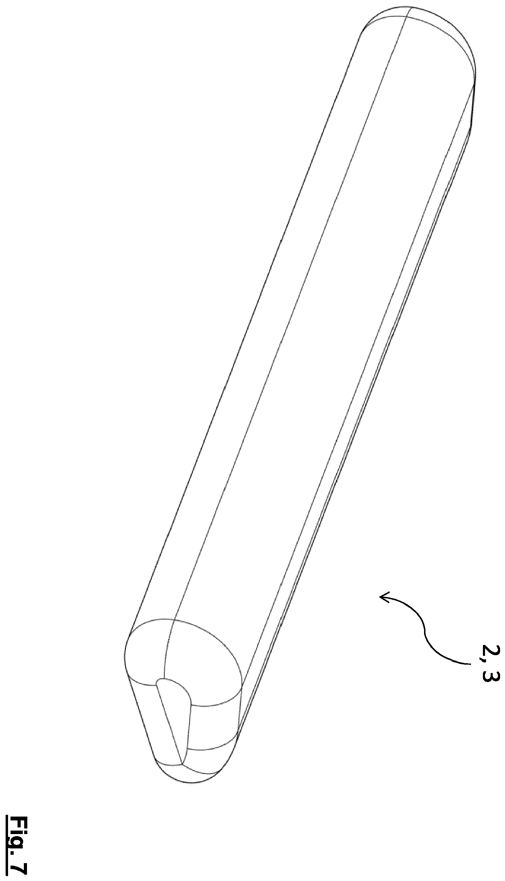

Ein Ausführungsbeispiel, das in den Figuren 1 bis 6 dargestellt ist, umfasst eine erfindungsgemäße Vorrichtung 1 zum Formen eines strangförmigen Lebensmittels 2 in Form eines Fleischstücks 3, wobei das Fleischstück 3 eine ungleichmäßige Oberflächenkontur aufweist, die mittels der Vorrichtung 1 korrigiert werden soll. Das Fleischstück 3 in einem ungeformten Zustand ist in Figur 7 dargestellt.

Die erfindungsgemäße Vorrichtung 1 umfasst ein Gehäuse 4, das einen Innenraum 5 einschließt und welches an zwei gegenüberliegenden Seitenwänden 6 jeweils mit einer verschließbaren Öffnung 7 versehen ist. Die Öffnungen 7 bilden eine Zuführöffnung 8 und eine Abführöffnung aus, wobei lediglich die Zuführöffnung 8 in den Figuren dargestellt ist. An den Öffnungen 7 ist jeweils ein Transportband 9, angeordnet, wobei lediglich das der Zuführöffnung 8 zugehörige Transportband 9 in den Figuren dargestellt ist. Das Transportband 9 ist hierbei zur erstmaligen Platzierung des Lebensmittels 2 vorgesehen. Um hierbei eine für einen anschließenden Form- und Schneidvorgang geeignete Positionierung des Lebensmittels 2 auf dem Transportband 9 zu gewährleisten, ist die Vorrichtung 1 mit einer stillstehenden Positionierungseinrichtung 10 in Form einer Führungsschiene versehen, die das aufgelegte Lebensmittel 2 in eine Ausgangsposition überführt, in der das selbige mittig auf dem Transportband 9 aufliegt. Eine Bewegungsrichtung 11 des Transportbands 9 ist hierbei parallel zu einer Vorderseite 12 der Vorrichtung 1 ausgerichtet, wobei die Bewegungsrichtung 11 des Transportbands 9 eine X-Richtung 13 definiert. Beim Auflegen des Lebensmittels 2 auf das Transportband 9 wird das Lebensmittel 2 in X-Richtung 13 zu der Zuführöffnung 8 gefördert. Für den Fall, dass das Lebensmittel 2 hierbei nicht bereits mittig - bezogen auf eine Breite 14 des Transportbands 9 betrachtet - auf dem Transportband 9 aufliegt, erfolgt eine Korrektur der Position mittels der Positionierungseinrichtung 10, indem das Lebensmittel 2 während der Bewegung entlang der Positionierungsrichtung 10 gleitet und hierbei quer zur Bewegungsrichtung 11 verschoben und ausgerichtet wird. Eine Lage der Positionierungseinrichtung 10 relativ zu dem Transportband 9 ist einstellbar, sodass die Position des Lebensmittels 2 in Abhängigkeit einer Breite des selbigen korrigierbar ist.

Darüber hinaus weist die erfindungsgemäße Vorrichtung 1 eine Zuführeinrichtung 15 als auch eine Abführeinrichtung 16 in Form eines einzigen, durch den Innenraum 5 der Vorrichtung 1 hindurch verlaufenden, Transportbands 17 auf, wobei das strangförmige Lebensmittel 2 mittels des Transportbands 17 einer im Innenraum 5 der Vorrichtung 1 angeordneten Presskammer 18 zuführbar und aus der Presskammer 18 abführbar ist. Eine Bewegungsrichtung 19 des Transportbands 17 verläuft hierbei ebenfalls in X-Richtung 13.

Mittels des dritten Transportbands, welches an der Abführöffnung angeordnet ist, ist das Lebensmittel 2 zu einer ebenfalls nicht in den Figuren gezeigten Schneideinrichtung beförderbar, die das geformte Lebensmittel 2 in Scheiben zerteilt.

Das Lebensmittel 2 wird ausgehend von dem ersten Transportband 9 an das zweite Transportband 17 übergeben, von welchem das Lebensmittel 2 an das letzte Transportband übergeben wird, wobei eine jeweilige Breite 14 der Transportbänder 9, 17 übereinstimmt. Das erste Transportband 9 erstreckt sich hierbei teilweise in den Innenraum 5 der Vorrichtung 1 hinein, sodass eine Übergabe des Lebensmittels 2 im Innenraum 5 der Vorrichtung 1 erfolgt. Eine Zuführung des Lebensmittels 2 in die Presskammer 18 und eine Abführung des selbigen erfolgen somit auf zwei gegenüberliegenden Seiten der Presskammer 18. Dabei wird das Lebensmittel 2 fortwährend in X-Richtung 13 bewegt, sodass die Ausgangsposition des Lebensmittels 2 - relativ zu der Breite der Transportbänder 9, 17 - mit einer Endposition des selbigen nach Durchlaufen der Vorrichtung 1 überein, sodass die Ausgangsposition im Wesentlichen auch für die anschließende Schneideinrichtung bereits beim Auflegen auf das erste Transportband 9 vorgebbar ist. Sämtliche drei Transportbänder verlaufen in horizontale Richtung und Oberflächen der Obertrume befinden sich auf demselben Niveau in Z-Richtung betrachtet.

Im Innenraum 5 der Vorrichtung 1 ist die Presskammer 18 bestehend aus sechs Wandungen 20 angeordnet, von denen vier als Presstempel 28, 29, 30, 31 ausgebildet und jeweils mittels einer zugehörigen Presseinrichtung 21, 22, 23, 24 in unterschiedliche Richtungen bewegbar sind.

Eine eine Vorderseite 25 der Presskammer 18 ausbildende sowie eine einen Boden 26 der Presskammer 18 ausbildende Wandung 20 sind hierbei fest mit der Vorrichtung 1 und deren Maschinengestell verbunden, während die übrigen Wandungen 20 bewegbare Pressstempel 28, 29, 30, 31 ausbilden, die jeweils in eine Richtung relativ dem Maschinengestell und zu dem Lebensmittel 2 verschiebbar sind. Hierzu sind die Pressstempel 28, 29, 30, 31 jeweils mit einer Presseinrichtung 21, 22, 23, 24 jeweils in Form eines elektromechanischen Zylinders, der durch einen Servomotor angetrieben wird gekoppelt. Mittels der Presseinrichtungen 21, 22, 23, 24 erfolgt eine druckgesteuerte Bewegung der zugehörigen Pressstempel 28, 29, 30, 31, wobei die Bewegung bei Erreichen eines vorgegebenen Enddrucks automatisch beendet wird. Eine Dicke der die Vorderseite 25 der Presskammer 18 ausbildenden Wandung 20 ist hierbei zur Anpassung an einen Schneidquerschnitt der Vorrichtung 1 verstellbar ausgebildet, sodass die Presskammer 18 an eine Breite des zu formenden Lebensmittels 2 anpassbar ist.

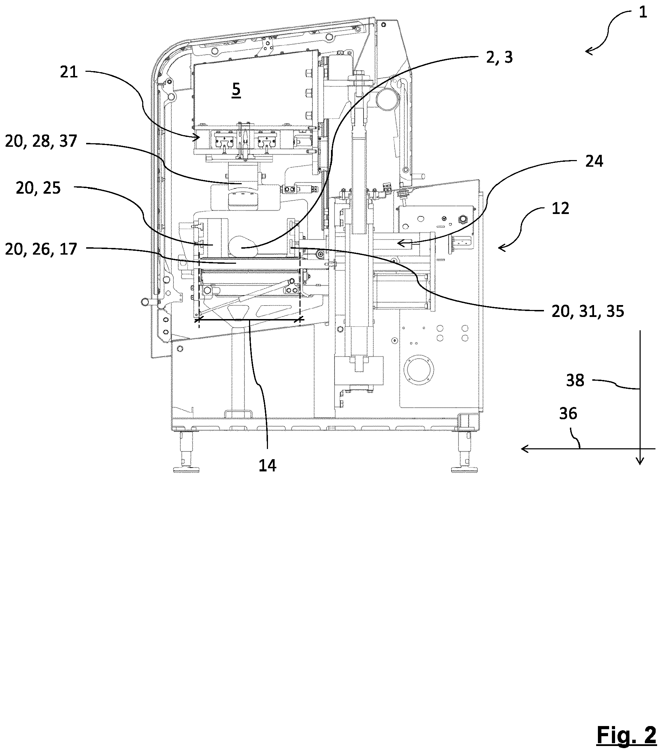

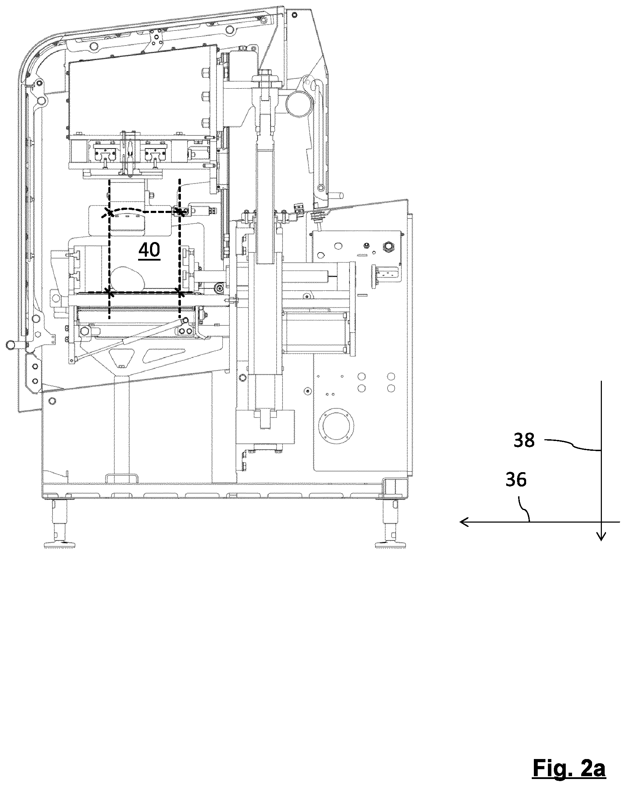

Die den Boden 26 der Presskammer 18 bildende Wandung 20 ist hierbei fest in dem Maschinengestell gelagert und mit dem zweiten Transportband 17 bedeckt, wobei der Boden 26 zwischen einem Obertrum 32 und einem Untertrum 33 des zweiten Transportbands 17 eingeschlossen ist. Eine Breite 14 des zweiten Transportbands 17 ist hierbei größer ausgebildet als eine quer zu der Bewegungseinrichtung 11 des Transportbands 17 gemessene Breite 34 der Presskammer 18 in einem Endzustand, welcher im Zusammenhang mit den Figuren 2 bis 6 im Detail beschrieben wird. Der Boden 26 der Presskammer 18 wird mithin vollständig von dem Transportband 17 bedeckt, sodass während des Formvorgangs in Z-Richtung in das Lebensmittel 2 eingeleitete Presskräfte von dem Lebensmittel 2 über das Transportband 17 in den Boden 26 übertragen werden.

Der eine Rückseite 35 der Presskammer 18 ausbildende, vierte Pressstempel 31 ist in eine senkrecht zur X-Richtung 13 verlaufende Y-Richtung 36 bewegbar, wobei der eine Oberseite 37 der Presskammer 18 bildende, erste Pressstempel 28 in eine Z-Richtung 38 bewegbar ist, die senkrecht zur X-Richtung 13 und zur Y-Richtung 36 ausgerichtet ist. Dabei ist die Oberseite 37 der Presskammer 18 in einem vertikalen Querschnitt betrachtet kreisbogenförmig ausgebildet. Die beiden übrigen Seiten 27 der Presskammer 18 ausbildenden zweiten und dritten Pressstempel 29, 30, sind in die X-Richtung 13 beziehungsweise entgegen der X-Richtung 13 bewegbar, wobei die selbigen mit ihren Presseinrichtungen 22, 23 derart mit dem ersten Pressstempel 28 und dessen zugehöriger Presseinrichtung 21 gekoppelt sind, dass sich diese bei einer Bewegung der Oberseite 37 in Z-Richtung 36 mitbewegen. Ferner weist der jeweilige Pressstempel 29, 30 ein Kontaktelement 42 auf, welches an einem dem Lebensmittel 2 zugewandte Ende angeordnet ist. Das Kontaktelement 42 bildet in dem Endzustand der Presskammer 18 eine Kontaktfläche aus, die mit dem Lebensmittel 2 in Kontakt steht. Die jeweilige Kontaktfläche 41 des zweiten und dritten Pressstempels 29, 30 ist hierbei in ihrer Größe veränderbar ausgebildet. Dabei ist das Kontaktelement 42 als umgekantetes Blech ausgebildet, welches mittels einer Feder bewegbar an dem jeweiligen Pressstempel 29, 30 einerseits und fest an dem ersten Pressstempel 28 andererseits befestigt ist, sodass eine Relativbewegung zwischen dem jeweiligen Pressstempel 29, 30 und dem ersten Pressstempel 28 ermöglicht ist. Der erste Pressstempel 28 ist mit seiner Presseinrichtung 21 hierbei jeweils mittels einer Linearführung mit dem zweiten und dritten Pressstempel 29, 30 und der zugehörigen Presseinrichtung 22, 23 gekoppelt. In dem Ausgangszustand der Presskammer 18 wird die Feder schwerkraftbedingt durch den jeweiligen Pressstempel 29, 30 derart ausgelenkt, dass ein Abschnitt des Kontaktelements 42 über eine Oberfläche des jeweiligen Pressstempels 29, 30 hervorsteht. In einem Ausgangszustand der Presskammer 18, welcher in Figur 2 dargestellt ist, weist die selbige ein erstes umschlossenes Volumen auf, wobei der Ausgangszustand dann vorliegt, wenn die Pressstempel 28, 29, 30, 31 derart zurückgezogen sind, dass eine Zuführung des Lebensmittels 2 in die Presskammer 18 ermöglicht wird. Das von der Presskammer 18 umschlossene Volumen wird hierbei von Ebenen eingeschlossen, die einer gedanklichen Verlängerung der Wandungen 20 der Presskammer 18 entsprechen.

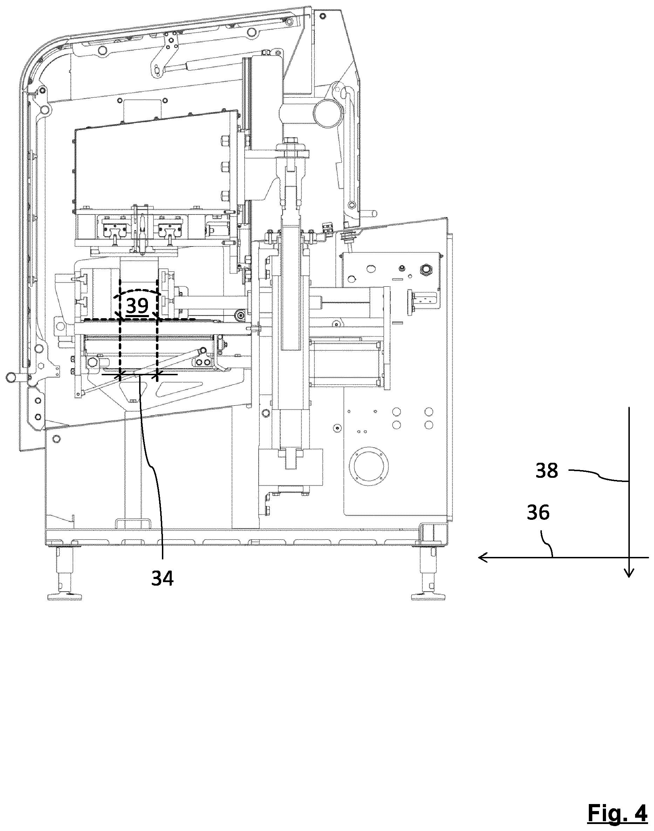

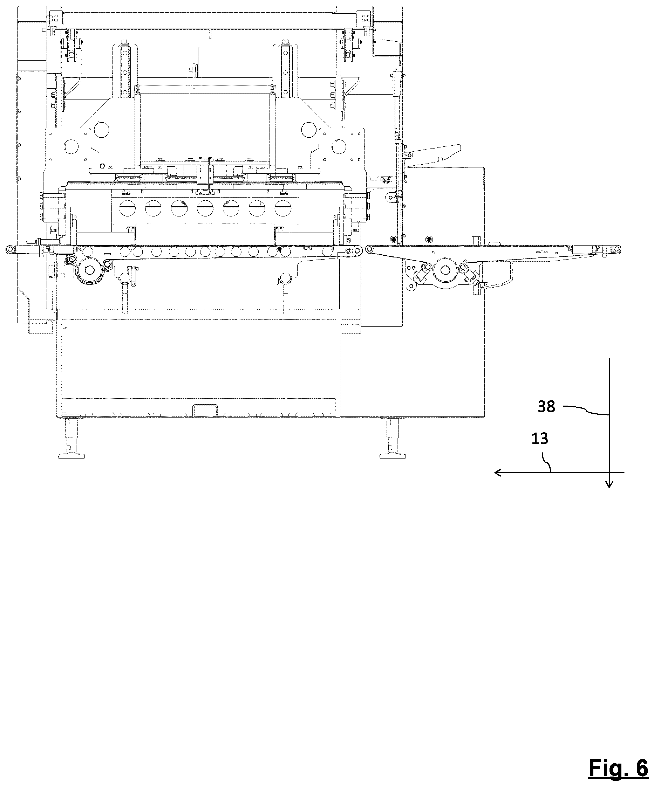

Infolge einer translatorischen Verschiebung der vier Pressstempel 28, 29, 30, 31 lässt sich die Presskammer 18 von ihrem Ausgangszustand in einen Endzustand überführen, bei der die selbige ein zweites umschlossenes Volumen aufweist. Dabei werden die als Pressstempel 28, 29, 30, 31 ausgebildeten Wandungen 20 der Presskammer 18, die insgesamt eine "Halbkammer" ausbilden, relativ zu dem Lebensmittel 2 bewegt. Der Endzustand der Presskammer ist in den Figuren 4 und 6 gezeigt.

Zum Formen des Lebensmittels 2 wird die Presskammer 18 zunächst in ihren Ausgangszustand überführt, indem die Presskammer 18 geöffnet wird. Hierzu wird der erste Pressstempel 28 der Presskammer 18 mit dem zweiten und dritten Pressstempel 29, 30 entgegen der Y-Richtung 36 bewegt, sodass ein Öffnungsquerschnitt 40 freigegeben wird, welcher gut in der Figur 2a erkennbar ist. Der Öffnungsquerschnitt 40 der Presskammer 18 übersteigt hierbei einen Querschnitt des Lebensmittels 2, sodass das selbige der Presskammer 18 zuführbar ist.

Das Lebensmittel 2, welches zur besseren Formbarkeit derart temperiert wurde, dass eine Temperatur zumindest in Randbereichen des Lebensmittels 2 gegenüber einer Temperatur des Lebensmittels 2 in einem Kernbereich verringert ist, wird anschließend mittels des ersten Transportbands 9 in die Presskammer 18 eingeführt. Dabei ist das Lebensmittel 2 mittels der Positionierungseinrichtung 10 derart auf dem ersten Transportband 9 platziert worden, dass das selbige bei Einfuhr in die Presskammer 18 nah an der die Rückseite 35 ausbildenden Wandung 20 anliegt, wie in Figur 2 dargestellt ist. Im Zuge der Einführung des Lebensmittels 2 in den Innenraum 5 der Vorrichtung 1 erfolgt eine Längenmessung des Lebensmittels 1 mittels einer nicht in den Figuren dargestellten Lichtschranke.

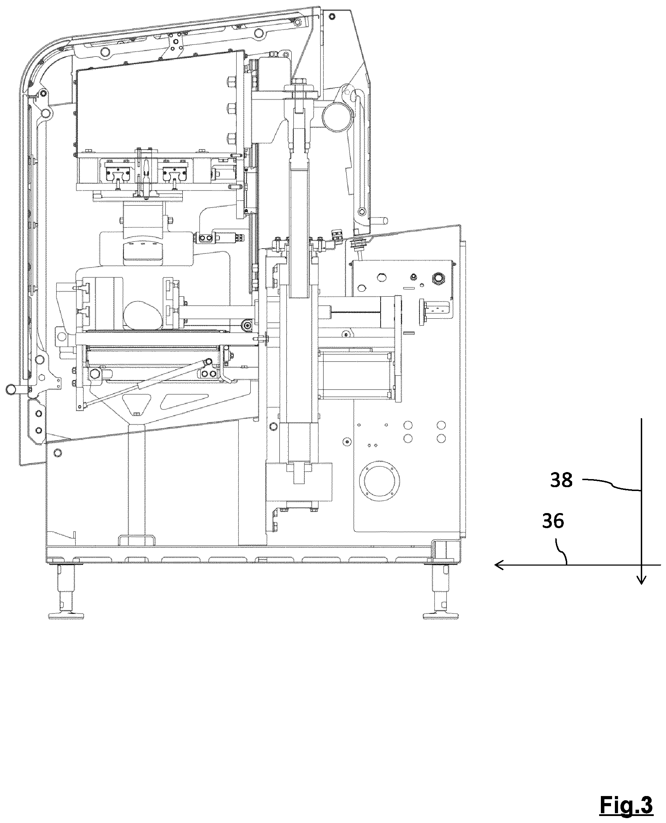

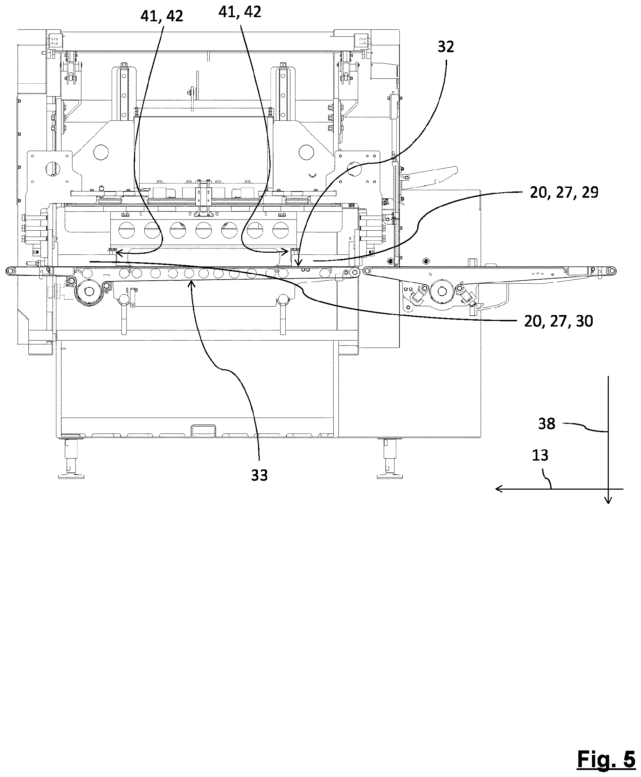

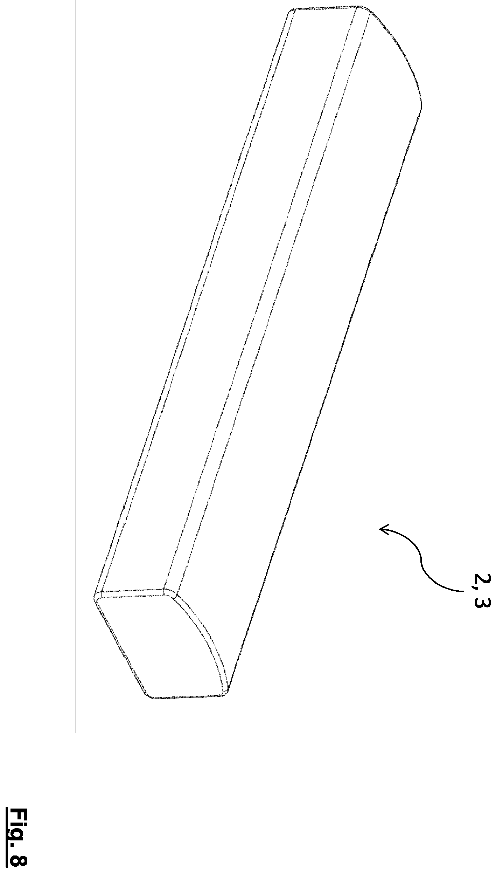

Sobald das Lebensmittel 2 mittig in Vorrichtung 1 angeordnet ist, wird die Zuführöffnung 8 mittels eines Verschließelements wieder geschlossen und das Lebensmittel an das zweite Transportband übergeben und relativ zu der Presskammer mittig zu dieser ausgerichtet. Hierbei werden der zweite und der dritte Pressstempel 29, 30 bereits in X-Richtung 13 und entgegen der X-Richtung 13 bewegt, sodass ein Abstand zwischen den beiden Pressstempeln 29, 30 derart verringert wird, dass dieser im Wesentlichen einer Länge des Lebensmittels 2 entspricht, diese vorzugsweise geringfügig übersteigt. Das zweite Transportband 17 wird angehalten. Anschließend wird - wie gut in der Figur 3 erkennbar ist - der die die Rückseite 35 der Presskammer 18 ausbildende Pressstempel 31 derart bewegt, dass dieser in Kontakt mit dem Lebensmittel 2 kommt. Infolge von Presskräften, welche von dem die Rückseite ausbildenden Pressstempel 31 auf das Lebensmittel 2 ausgeübt werden, entweicht das Lebensmittel 2 in die X-Richtung 36 sowie in die Z-Richtung 38. Analog wird der erste Pressstempel 28 mittels Bewegung desselbigen in Z-Richtung 38 mit dem Lebensmittel 2 in Kontakt gebracht wie gut anhand von Figur 4 erkennbar ist. Im Zuge der Bewegung des ersten Pressstempels 28 in Z-Richtung 38 kommt der Pressstempel 28 mit dem Lebensmittel 2 in Kontakt. Hierbei ist sind die Kontaktelement 42 zunächst noch ausgelenkt. Bei einer weiteren Druckausübung kommen der zweite und der dritte Pressstempel 29, 30 mit dem Transportband 17 in Kontakt. Die Linearführung in Verbindung mit der Feder ermöglicht es sodann, den ersten Pressstempel 28 weiter in Z-Richtung 38 zu verschieben, indem das Kontaktelement 42 in Z-Richtung 38 verschoben wird, sodass die Kontaktfläche 41 des jeweiligen Pressstempels 29, 30 hierbei in der Größe verkleinert wird. Das Lebensmittel 2 wird mithin in Z-Richtung 38 komprimiert wird, wodurch eine verstärkte Ausdehnung des Lebensmittels 2 in die X-Richtung 13 als auch entgegen der X-Richtung 13 herbeigeführt wird, während ein Querschnitt des Lebensmittels 2 parallel zu einer Y-Z-Ebene schon einem "Endquerschnitt" der Presskammer 18 entspricht. Ebenso werden die die Seiten 27 der Presskammer 18 bildenden Pressstempel 29, 30 in X-Richtung 13 beziehungsweise entgegen der X-Richtung 13 bewegt, um mit dem Lebensmittel 2 in Kontakt zu kommen, wie in den Figuren 5 und 6 zu erkennen ist. Die Presskammer 18 liegt mithin in ihrem Endzustand vor, in welchem alle Wandungen 20 der Presskammer 18 mit dem Lebensmittel 2 in Kontakt stehen und Presskräfte von den Pressstempeln 28, 29, 30, 31 in das Lebensmittel 2 eingeleitet werden. Das Lebensmittel 2, welches in einem Innenraum 39 der Presskammer 18 eingeschlossen ist, wird hierdurch in einen geformten Zustand überführt, welcher in der Figur 8 erkennbar ist und möglichst gut an einen Quader angenähert sein soll.

Anschließend werden die als Pressstempel 28, 29, 30, 31 ausgebildeten Wandungen 20 in umgekehrter Reihenfolge von dem Lebensmittel 2 entfernt, wobei das selbige im Wesentlichen in seinem geformten Zustand verbleibt.

Zuletzt wird das Lebensmittel 2 mittels des zweiten Transportbands 17 in X-Richtung 13 aus der Presskammer 18 und dem Innenraum 5 der Vorrichtung 1 heraus gefördert. Dabei wird der erste Pressstempel 28 der Presskammer 18 mit dem zweiten und dritten Pressstempel 29, 30 erneut entgegen der Y-Richtung 36 bewegt, sodass ein dem ersten Öffnungsquerschnitt 40 gegenüberliegender zweiter Öffnungsquerschnitt freigegeben wird, der einen Querschnitt des Lebensmittel 2 übersteigt, sodass das selbige aus der Presskammer 18 abführbar ist. Schließlich wird das Lebensmittel 2 an das dritte Transportband übergeben, mittels dessen das Lebensmittel 2 zu der Schneidmaschine transportierbar ist.

### Bezugszeichenliste:

- 1: Vorrichtung
- 2: Lebensmittel
- 3: Fleischstück
- 4: Gehäuse
- 5: Innenraum
- 6: Seitenwand
- 7: Öffnung
- 8: Zuführöffnung
- 9: erstes Transportband
- 10: Positionierungseinrichtung
- 11: Bewegungsrichtung
- 12: Vorderseite
- 13: X-Richtung
- 14: Breite
- 15: Zuführeinrichtung
- 16: Abführeinrichtung
- 17: Transportband
- 18: Presskammer
- 19: Bewegungsrichtung
- 20: Wandung
- 21: erste Presseinrichtung
- 22: zweite Presseinrichtung
- 23: dritte Presseinrichtung
- 24: vierte Presseinrichtung
- 25: Vorderseite
- 26: Boden
- 27: Seite
- 28: erster Pressstempel
- 29: zweiter Pressstempel
- 30: dritter Pressstempel
- 31: vierter Pressstempel
- 32: Obertrum
- 33: Untertrum
- 34: Breite
- 35: Rückseite
- 36: Y-Richtung
- 37: Oberseite
- 38: Z-Richtung
- 39: Innenraum
- 40: Öffnungsquerschnitt
- 41: Kontaktfläche
- 42: Kontaktelement

## Patentansprüche

1. Vorrichtung (1) zum Formen eines strangförmigen Lebensmittels (2), insbesondere eines Fleischstücks (3), mit
a) einer Presskammer (18), die von Wandungen (20) begrenzt ist und von denen mindestens eine mittels einer Presseinrichtung (21, 22, 23, 24) bewegbar und als Pressstempel (28, 29, 30, 31) ausgebildet ist, wodurch die Presskammer (18) von einem Ausgangszustand mit einem ersten umschlossenen Volumen in einen Endzustand mit einem zweiten umschlossenen Volumen überführbar ist,
b) einer Zuführeinrichtung (15) zum Zuführen des Lebensmittels (2) in die Presskammer (18),
c) eine Abführeinrichtung (16) zum Abführen des Lebensmittels (2) aus der Presskammer (18),
**dadurch gekennzeichnet, dass**
d) ein mit dem in der Presskammer (18) befindlichen Lebensmittel (2) in Kontakt tretender Pressstempel (28) einer ersten Presseinrichtung (21) derart mit mindestens einer in eine andere Richtung bewegbaren zweiten Presseinrichtung (22) und/oder einer Wandung (20) der Presskammer (18) gekoppelt ist, dass die zweite Presseinrichtung (22) insgesamt und/oder die vorgenannte Wandung (20) gemeinsam mit dem Pressstempel (28) der ersten Presseinrichtung (21) relativ zu dem Lebensmittel (2) bewegbar ist,
e) wobei das Lebensmittel (2) durch Bewegung der als Presstempel (28, 29, 30, 31) ausgebildeten Wandungen (20) der Presskammer (18) von einem ungeformten Zustand in einen geformten Zustand überführbar ist,
f) wobei die als Pressstempel (28, 29, 30, 31) ausgebildeten Wandungen (2) nach einem Überführen des Lebensmittels (2) in einen geformten Zustand in umgekehrter Reihenfolge von dem Lebensmittel (2) entfernbar sind, wobei das selbige im Wesentlichen in seinem geformten Zustand verbleibt.

2. Vorrichtung (1) nach Anspruch 1, **dadurch gekennzeichnet, dass** der Pressstempel (28) der ersten Presseinrichtung (21) quer, vorzugsweise senkrecht, zu einem Boden (26) der Presskammer (18), der vorzugsweise ungefähr waagerecht ausgerichtet ist, bewegbar ist.

3. Vorrichtung (1) nach Anspruch 1 oder 2, **dadurch gekennzeichnet, dass** an dem ersten Presstempel (28) eine zweite Presseinrichtung (22) und eine dritte Presseinrichtung (23) befestigt sind, mit denen ein zweiter und ein dritter Pressstempel (29, 30) in entgegengesetzte Richtungen bewegbar sind und dass vorzugsweise die zweite Presseinrichtung (22) und die dritte Presseinrichtung (23) an gegenüberliegenden Enden des ersten Presstempels (28) angeordnet sind.

4. Vorrichtung (1) nach Anspruch 3, **dadurch gekennzeichnet, dass** eine mit dem Lebensmittel (2) im Endzustand der Presskammer (18) in Kontakt stehende Kontaktfläche (41) des zweiten Presstempels (29) und/oder eine Kontaktfläche (41) des dritten Pressstempels (30) veränderbar, vorzugsweise in ihrer Größe veränderbar, ist.

5. Verfahren zum Formen eines strangförmigen Lebensmittels (2), insbesondere eines Fleischstücks (3), mit den folgenden Verfahrensschritten:
a) eine von Wandungen (20) begrenzte Presskammer (18) wird geöffnet, indem mindestens eine der Wandungen (20) relativ zu mindestens einer anderen der Wandungen (20) bewegt wird, wodurch ein Öffnungsquerschnitt (40) freigegeben wird,
b) das Lebensmittel (2) wird durch den Öffnungsquerschnitt (40) in die Presskammer (18) eingeführt,
c) der Öffnungsquerschnitt (40) der Presskammer (18) wird wieder geschlossen und das Lebensmittel (2) durch Bewegung von als Presstempel (28, 29, 30, 31) ausgebildeten Wandungen (20) der Presskammer (18) von einem ungeformten Zustand in einen geformten Zustand überführt,
d) ein Öffnungsquerschnitt (40) der Presskammer (18) wird freigegeben und das geformte Lebensmittel durch diesen Öffnungsquerschnitt (40) aus der Presskammer (18) abgeführt,
e) wobei bei einer Bewegung des Pressstempels (28) einer ersten Presseinrichtung (21) mindestens eine zweite Presseinrichtung (22) mit ihrem Pressstempel (29) mitbewegt wird,
**gekennzeichnet durch** den folgenden Verfahrensschritt:
f) nach dem Überführen des Lebensmittels (2) in den geformten Zustand werden die als Pressstempel (28, 29, 30, 31) ausgebildeten Wandungen (2) in umgekehrter Reihenfolge von dem Lebensmittel (2) entfernt, wobei das selbige im Wesentlichen in seinem geformten Zustand verbleibt.

6. Verfahren nach Anspruch 5, **dadurch gekennzeichnet, dass** das Lebensmittel (2) mittels eines Transportbandes (9) in die Presskammer (18) eingeführt und/oder mittels eines Transportbandes aus der Presskammer (18) abgeführt wird.

7. Verfahren nach Anspruch 5 oder 6, **dadurch gekennzeichnet, dass** ein Transportband (17) eine dem ersten Pressstempel (28) gegenüber liegende Wandung (20) der Presskammer zumindest teilweise umläuft.

8. Verfahren nach einem der Ansprüche 5 bis 7, **dadurch gekennzeichnet, dass** der zweite Pressstempel (29) bei Erreichen einer Endposition, in der der zweite Pressstempel (29) im Wesentlichen mit einer Wandung (20) der Presskammer (18) in Kontakt tritt und/oder ein dritter Pressstempel (30) bei Erreichen einer Endposition, in der der dritte Pressstempel (30) im Wesentlichen mit einer Wandung (20) in Kontakt tritt, relativ zu dem ersten Pressstempel (28) in die Richtung, in die der erste Presstempel (28) bewegt wird, bewegt wird beziehungsweise werden.

9. Verfahren nach einem der Ansprüche 5 bis 8, **dadurch gekennzeichnet, dass** die Zuführung des ungeformten Lebensmittels (2) in die Presskammer (18) und die Abführung des geformten Lebensmittels (2) aus der Presskammer (18) auf gegenüberliegenden Seiten (27) der Presskammer (18) erfolgen, vorzugsweise durch Bewegen des Lebensmittels (2) in dieselbe Richtung.

10. Verfahren nach einem der Ansprüche 5 bis 9, **dadurch gekennzeichnet, dass** mindestens eine als Pressstempel (29, 30) ausgebildete Wandung (20) während des Einführens des Lebensmittels (2) in die Presskammer (18) senkrecht und/oder parallel zu einer Bewegungsrichtung (19) des Lebensmittels (2), in der das Lebensmittel (2) der Presskammer (18) zugeführt wird, vorzugsweise in Bewegungsrichtung (19) oder senkrecht dazu, bewegt wird, sodass ein Abstand zwischen der Wandung (20) und einer gegenüberliegenden Wandung (20) der Presskammer (18) verringert wird.

11. Verfahren nach einem der Ansprüche 5 bis 10, **dadurch gekennzeichnet, dass** eine Temperatur des Lebensmittels 2 in einem Randbereich geringer ist als eine Temperatur des Lebensmittels 2 in einem Kernbereich.

## Claims

1. A device (1) for shaping a strand-like foodstuff (2), particularly a piece of meat (3), having
a) a pressing chamber (18) which is delimited by walls (20), of which at least one can be moved by means of a pressing device (21, 22, 23, 24) and is designed as a pressing plunger (28, 29, 30, 31), as a result of which the pressing chamber (18) can be transitioned from an initial state having a first enclosed volume to an end state having a second enclosed volume,
b) a supply device (15) for supplying the foodstuff (2) to the pressing chamber (18),
c) a removal device (16) for removing the foodstuff (2) from the pressing chamber (18), **characterized in that**
d) a pressing plunger (28) of a first pressing device (21), which comes into contact with the foodstuff (2) that is located in the pressing chamber (18), is coupled with at least one second pressing device (22), which can be moved in a different direction, and/or a wall (20) of the pressing chamber (18) in such a manner that the second pressing device (22) as a whole and/or the previously mentioned wall (20) together with the pressing plunger (28) of the first pressing device (21) can be moved relative to the foodstuff (2),
e) wherein the foodstuff (2) can be transformed from an unshaped state to a shaped state by moving the walls (20) of the pressing chamber (18), which are designed as pressing plungers (28, 29, 30, 31),
f) wherein the walls (2), which are designed as pressing plungers (28, 29, 30, 31), can be removed from the foodstuff (2) in reverse order after transformation of the foodstuff (2) to a shaped state, wherein the same foodstuff remains substantially in its shaped state.

2. The device (1) according to Claim 1, **characterized in that** the pressing plunger (28) of the first pressing device (21) can be moved transversely, preferably perpendicularly, to a base (26) of the pressing chamber (18) which is preferably aligned approximately horizontally.

3. The device (1) according to Claim 1 or 2, **characterized in that** a second pressing device (22) and a third pressing device (23) are fastened to the first pressing plunger (28), using which pressing devices a second and a third pressing plunger (29, 30) can be moved in opposite directions and **in that** preferably the second pressing device (22) and the third pressing device (23) are arranged at opposite ends of the first pressing plunger (28).

4. The device (1) according to Claim 3, **characterized in that** a contact surface (41) of the second pressing plunger (29) and/or a contact surface (41) of the third pressing plunger (30) - which contact surface is in contact with the foodstuff (2) in the end state of the pressing chamber (18) - can be changed, preferably can be changed in terms of its size.

5. A method for shaping a strand-like foodstuff (2), particularly a piece of meat (3), having the following method steps:
a) a pressing chamber (18), which is delimited by walls (20), is opened in that at least one of the walls (20) is moved relatively to at least one other of the walls (20), as a result of which an opening cross section (40) is cleared,
b) the foodstuff (2) is introduced into the pressing chamber (18) through the opening cross section (40),
c) the opening cross section (40) of the pressing chamber (18) is closed again and the foodstuff (2) is transformed from an unshaped state to a shaped state by moving walls (20) of the pressing chamber (18), which are designed as pressing plungers (28, 29, 30, 31),
d) an opening cross section (40) of the pressing chamber (18) is cleared and the shaped foodstuff is removed from the pressing chamber (18) through this opening cross section (40),
e) the pressing plunger (29) of at least one second pressing device (22) is also moved during a movement of the pressing plunger (28) of a first pressing device (21),
**characterized by** the following method step:
f) following the transformation of the foodstuff (2) to the shaped state, the walls (2), which are designed as pressing plungers (28, 29, 30, 31), are removed from the foodstuff (2) in reverse order, wherein the same foodstuff remains substantially in its shaped state.

6. The method according to Claim 5, **characterized in that** the foodstuff (2) is introduced into the pressing chamber (18) by means of a conveyor belt (9) and/or removed from the pressing chamber (18) by means of a conveyor belt.

7. The method according to Claim 5 or 6, **characterized in that** a conveyor belt (17) runs at least partially around a wall (20) of the pressing chamber, which is opposite the first pressing plunger (28).

8. The method according to one of Claims 5 to 7, **characterized in that** the second pressing plunger (29), when reaching an end position in which the second pressing plunger (29) substantially comes into contact with a wall (20) of the pressing chamber (18), and/or a third pressing plunger (30), when reaching an end position in which the third pressing plunger (30) substantially comes into contact with a wall (20), is or are moved relative to the first pressing plunger (28) in the direction in which the first pressing plunger (28) is moved.

9. The method according to one of Claims 5 to 8, **characterized in that** the supply of the unshaped foodstuff (2) to the pressing chamber (18) and the removal of the shaped foodstuff (2) from the pressing chamber (18) take place at opposite sides (27) of the pressing chamber (18), preferably by moving the foodstuff (2) in the same direction.

10. The method according to one of Claims 5 to 9, **characterized in that** during the introduction of the foodstuff (2) into the pressing chamber (18), at least one wall (20), which is designed as a pressing plunger (29, 30), is moved perpendicularly and/or parallel to a movement direction (19) of the foodstuff (2), in which the foodstuff (2) is supplied to the pressing chamber (18), preferably in the movement direction (19) or perpendicularly thereto, so that a distance between the wall (20) and an opposite wall (20) of the pressing chamber (18) is reduced.

11. The method according to one of Claims 5 to 10, **characterized in that** a temperature of the foodstuff 2 is lower in an edge region than a temperature of the foodstuff 2 in a core region.

## Revendications

1. Dispositif (1), destiné à façonner un produit alimentaire (2) en forme de boudin, notamment une pièce de viande (3), comprenant
a) une chambre de pressage (18), qui est délimitée par des parois (20) et dont au moins une est déplaçable au moyen d'un système de pressage (21, 22, 23, 24) et est conçue sous la forme d'un poinçon de pressage (28, 29, 30, 31), suite à quoi, la chambre de pressage (18) est susceptible d'être amenée d'une position initiale avec un premier volume entouré dans une position finale, avec un deuxième volume entouré,
b) un système d'amenage (15), destiné à amener le produit alimentaire (2) dans la chambre de pressage (18),
c) un système d'évacuation (16), destiné à évacuer le produit alimentaire (2) hors de la chambre de pressage (18),
**caractérisé**
d) **en ce qu'**un poinçon de pressage (28) d'un premier système de pressage (21) entrant en contact avec le produit alimentaire (2) situé dans la chambre de pressage (18) est accouplé avec au moins un deuxième système de pressage (22) déplaçable dans une autre direction et / ou une paroi (20) de la chambre de pressage (18), de telle sorte que le deuxième système de pressage (22) dans sa totalité et / ou la paroi (20) précédemment citée avec le poinçon de pressage (28) du premier système de pressage (21) soit déplaçable par rapport au produit alimentaire (2),
e) par déplacement des parois (20) de la chambre de pressage (18) conçues sous la forme de poinçons de pressage (28, 29, 30, 31), le produit alimentaire (2) pouvant être transféré d'un état non façonné dans un état façonné,
f) après un transfert du produit alimentaire (2) dans un état façonné, les parois (2) conçues sous la forme de poinçons de pressage (28, 29, 30, 31) étant susceptibles d'être retirées en séquence inverse du produit alimentaire (2), celui-ci restant sensiblement dans son état façonné.

2. Dispositif (1) selon la revendication 1, **caractérisé en ce que** le poinçon de pressage (28) du premier système de pressage (21) est déplaçable à la transversale, de préférence à la perpendiculaire d'un fond inférieur (26) de la chambre de pressage (18), qui de préférence est orientée approximativement à l'horizontale.

3. Dispositif (1) selon la revendication 1 ou 2, **caractérisé en ce que** sur le premier poinçon de pressage (28) sont fixés un deuxième système de pressage (22) et un troisième système de pressage (23), à l'aide desquels un deuxième et un troisième poinçons de pressage (29, 30) sont déplaçables dans la direction opposée et **en ce que** de préférence, le deuxième système de pressage (22) et le troisième système de pressage (23) sont placés sur des extrémités opposées du premier poinçon de pressage (28) .

4. Dispositif (1) selon la revendication 3, **caractérisé en ce qu'**une surface de contact (41) du deuxième poinçon de pressage (29) se trouvant en contact avec le produit alimentaire (2) dans la position finale de la chambre de pressage (18) et / ou une surface de contact (41) du troisième poinçon de pressage (30) est variable, de préférence variable dans sa dimension.

5. Procédé, destiné à façonner un produit alimentaire (2) en forme de boudin, notamment une pièce de viande (3), avec les étapes de procédé suivantes :
a) l'on ouvre une chambre de pressage (18) délimitée par des parois (20) en ce que l'on déplace au moins l'une des parois (20) par rapport à au moins une autre des parois (20), ce qui a pour effet de libérer une section transversale d'ouverture (40),
b) à travers la section transversale d'ouverture (40) l'on introduit le produit alimentaire (2) dans la chambre de pressage (18),
c) l'on referme la section transversale d'ouverture (40) de la chambre de pressage (18) et par déplacement de parois (20) de la chambre de pressage (18) conçues sous la forme de poinçons de pressage (28, 29, 30, 31), on transfère le produit alimentaire (2) d'un état non façonné dans un état façonné,
d) l'on libère une section transversale d'ouverture (40) de la chambre de pressage (18) et par la section transversale d'ouverture (40) de celle-ci, l'on évacue le produit alimentaire hors de la chambre de pressage (18),
e) lors du déplacement du poinçon de pressage (28) d'un premier système de pressage (21), au moins un deuxième système de pressage (22) avec son poinçon de pressage (29) étant déplacé conjointement,
**caractérisé par** l'étape de procédé suivante :
f) après le transfert du produit alimentaire (2) dans l'état façonné, l'on retire dans la séquence inverse les parois (2) conçues sous la forme de poinçons de pressage (28, 29, 30, 31) du produit alimentaire (2), celui-ci restant dans son état façonné.

6. Procédé selon la revendication 5, **caractérisé en ce que** l'on introduit le produit alimentaire (2) dans la chambre de pressage (18) au moyen d'une bande de transport (9) et / ou on l'évacue hors de la chambre de pressage (18) au moyen d'une bande de transport.

7. Procédé selon la revendication 5 ou 6, **caractérisé en ce qu'**une bande de transport (17) circule au moins partiellement autour d'une paroi (20) de la chambre de pressage opposée au premier poinçon de pressage (28).

8. Procédé selon l'une quelconque des revendications 5 à 7, **caractérisé en ce qu'**à l'atteinte d'une position finale, dans laquelle le deuxième poinçon de pressage (29) entre sensiblement en contact avec une paroi (20) de la chambre de pressage (18), le deuxième poinçon de pressage (29) et / ou à l'atteinte d'une position finale dans laquelle le troisième poinçon de pressage (30) entre sensiblement en contact avec une paroi (20), un troisième poinçon de pressage (30) est déplacé ou sont déplacés par rapport au premier poinçon de pressage (28) dans la direction dans laquelle le premier poinçon de pressage (28) est déplacé.

9. Procédé selon l'une quelconque des revendications 5 à 8, **caractérisé en ce que** l'amenage du produit alimentaire (2) non façonné dans la chambre de pressage (18) et l'évacuation du produit alimentaire (2) façonné hors de la chambre de pressage (18) s'effectuent sur des côtés (27) opposés de la chambre de pressage (18), de préférence par déplacement du produit alimentaire (2) dans la même direction.

10. Procédé selon l'une quelconque des revendications 5 à 9, **caractérisé en ce que** pendant l'introduction du produit alimentaire (2) dans la chambre de pressage (18), l'on déplace au moins une paroi (20) conçue sous la forme d'un poinçon de pressage (29, 30) à la perpendiculaire et / ou à la parallèle d'une direction de déplacement (19) du produit alimentaire (2) dans laquelle le produit alimentaire (2) est amené vers la chambre de pressage (18), de préférence dans la direction de déplacement (19) ou à la perpendiculaire de celle-ci, de sorte à réduire un écart entre la paroi (20) et une paroi (20) opposée de la chambre de pressage (18).

11. Procédé selon l'une quelconque des revendications 5 à 10, **caractérisé en ce qu'**une température du produit alimentaire 2 dans une zone marginale est inférieure à une température du produit alimentaire 2 à coeur.
